# EUROPEAN PATENT APPLICATION

(11) **EP 2 028 899 A2**
(43) Date of publication of application: **25.02.2009**
(21) Application number: 08162760.6
(22) Date of filing: 21.08.2008
(51) Int. Cl.: H04W 36/14, H04W 36/30

(54) **Providing voice call continuity**

(30) Priority: 22.08.2007 US 957387 P
(71) Applicant: MAVENIR SYSTEMS, INC., Richardson, TX 75081 (US)
(72) Inventor: Wallis, Michael Brett, McKinney, TX 75070 (US); Lubenski, Zeev V., Richardson, TX 75082 (US)
(74) Representative: Peterreins, Frank

(57) **Abstract**

The present disclosure includes a system and method for enhanced voice call continuity. A method includes receiving a request to handover a call session from a radio access network to an IP-CAN. The method further includes handing over the call session to the IP-CAN independent of an Internet Protocol Multimedia Subsystem (IMS).

## Description

### REFERENCE TO RELATED APPLICATIONS

The present application claims the benefit of priority to U.S. Patent Application No. 60/957,387 filed on August 22, 2007 the entire contents of which are incorporated herein.

### TECHNICAL FIELD

This invention relates to network management and, more particularly, to providing enhanced voice call continuity.

### BACKGROUND

Third-generation Partnership Project (3GPP) Voice Call Continuity (VCC) is a home internet protocol multimedia subsystem (IMS) application that provides capabilities to transfer voice calls between the circuit switched cellular domain (CS domain) and the IMS. VCC provides functions for voice call originations, voice call terminations and for Domain Transfers between the CS domain and the IMS and vice versa.

The VCC application is implemented in the user's home network. Voice calls from and to a VCC user equipment (UE) are anchored at the VCC application in the home IMS to provide voice continuity for the user during transition between the CS domain and the IMS. VCC voice calls in either the CS domain or IMS are anchored at the VCC Application Server in the home IMS using standard CS domain techniques available for rerouting calls at call establishment. A third party call control (3pcc) function is employed at the VCC application to facilitate inter domain mobility through the use of domain transfers between the CS domain and the IMS. Domain Transfers may be enabled in one direction (i.e. from the CS domain to the IMS or from the IMS to CS domain), or in both directions as per network configuration requirements. The VCC Application Server has the capability to perform domain transfers for a VCC UE's voice session multiple times in both directions.

By definition, VCC UEs are dual-mode phones, i.e. they contain both CS domain (e.g., Global System for Mobile Communications (GSM) and/or Universal Mobile Telecommunications System (UMTS)) and broadband (e.g., Session Initiation Protocol (SIP)) protocol stacks. The VCC UE initiates a domain transfer by originating a new call in the transferring-in domain. This origination is addressed to a fixed identifier which is routed to the VCC Application Server. The VCC Application Server then executes the required updates to the voice path and releases the transferred-out access leg. Domain transfers are sometimes triggered based upon the detection or loss of a particular type of radio coverage, as well as configured operator policy.

### SUMMARY

The present disclosure is directed to a system and method for enhanced voice call continuity. In some implementations, a method includes receiving a request to handover a call session from a radio access network to an internet protocol connectivity access network (IP-CAN). The method further includes handing over the call session to the IP-CAN independent of an Internet Protocol Multimedia Subsystem (IMS). In other implementations, a method includes generating a measurement report indicating signal strength of a wireless connection to a radio access network is weak independent of the actual signal strength. The method further includes transmitting the measurement report to the radio access network to initiate a handover to the IP-CAN.

Technical advantages of the present subject matter may include providing an improved method and system for providing handovers between a cellular radio technology and a broadband technology, between, for example, GSM-based technology and SIP-based technology. The present subject matter may improve resource efficiency by avoiding the pre-allocation of resources between the visited and home networks at call setup. Resources may be allocated on an as-needed basis. The present subject matter may also improve on handover latency by minimizing the number of components involved in a domain transfer. The impacted nodes are in the visited network. The present subject matter also may be operable independent of an IMS network.

The details of one or more embodiments of the invention are set forth in the accompanying drawings and the description below. Other features, objects, and advantages of the invention will be apparent from the description and drawings, and from the claims.

### DESCRIPTION OF DRAWINGS

FIGURE 1 is a block diagram illustrating a communication system for enhanced voice call continuity;
FIGURE 2 illustrates an example call flow in accordance with communication system of FIGURE 1; and
FIGURES 3 and 4 illustrate example methods for enhanced voice call continuity in communication system of FIGURE 1.

Like reference symbols in the various drawings indicate like elements.

### DETAILED DESCRIPTION

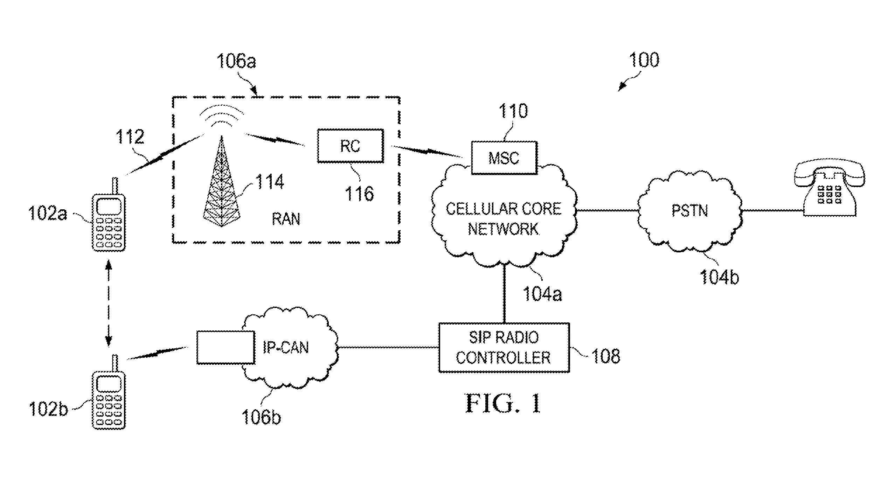

FIGURE 1 is a block diagram illustrating communication system 100 for managing dual-mode wireless devices 102 during handovers between different wireless access networks independent of an Internet Protocol Multimedia Subsystem (IMS). At a high level, system 100 includes a mobile device 102, core networks 104, access networks 106, and SIP radio controller 108. In general, when a mobile device 102 that is engaged in a call in the CS domain detects an IP-CAN 106b, it may initiate the handover process by registering with a SIP radio controller 108 and transmitting a measurement report to the cellular network 104 that indicates that the signal to the cellular radio controller 116 is weak and that the SIP radio controller 108 is the appropriate candidate for a handover. The SIP radio controller 108, appearing as a cellular radio controller (e.g., a base station controller or radio network controller) to the MSC 110, may communicate with the MSC 110 to coordinate the handover. The system 100 may present a call leg through an IP-CAN as originating from a cellular network.

In some implementations, the system 100 may provide one or more of the following: efficient utilization of network resources by allocating resources as needed instead of anchoring every call; operating in a circuit switched cellular domain (CS domain) independent of IMS; and reduced latency by decreasing the number of and distance between nodes involved in a handover.

In general, a dual-mode device is a device operable to use two or more different communication technologies. For example, the two modes may be a cellular radio technology and a broadband technology. Cellular radio technologies include Global System for Mobile Communications (GSM), Code Division Multiple Access (CDMA), Universal Mobile Telecommunications System (UMTS), and/or any other suitable protocol for formatting data for cellular communication. Broadband technologies, which include Institute of Electrical and Electronics Engineers (IEEE) 802.11 standards (WiFi), IEEE 802.16 standards (WiMax), 3GPP long term evolution standards (LTE), Unlicensed Mobile Access (UMA), proprietary technologies, and any other suitable technologies for formatting data for broadband communication. For example, broadband technologies may include communication system operable to transmit data greater than 64 kilobits/second (Kbps). In some embodiments, broadband technologies may include communication system operable to transmit data greater than 256 Kbps. In some embodiments, the width of a broadband channel is 20 KHz or greater. A common protocol used over broadband technologies is the Session Initiation Protocol (SIP), but any suitable protocol may be used with broadband technologies. In some embodiments, system 100 enables mobile devices 102 to switch between a cellular-radio-technology mode and a broadband-technology mode. In doing so, to access services from the core networks 104, mobile devices 102 may switch between two different access networks 106. For example, mobile device 102 may include a GSM mode and a SIP mode enabling mobile device 102 to access services either through Radio Access Network (RAN) 106a or IP-Connectivity Access Network (IP-CAN) 106b. In some embodiments, system 100 enables seamless switching between modes during a communication session. A communication session may be a call, data, video, audio, multimedia or other session in which information and requests are exchanged. As a result, the switching performed by system 100 may provide voice call continuity during a handover between different communication access technologies.

A mobile device 102 comprises an electronic device operable to receive and transmit wireless communication with system 100. As used in this disclosure, mobile devices 110 are intended to encompass cellular phones, data phones, portable computers, smart phones, personal data assistants (PDAs), one or more processors within these or other devices, or any other suitable processing devices capable of communicating information over a wireless link to access networks 106. In the illustrated embodiment, mobile device 102 is able to transmit in multiple bands such as, for example, in the cellular band and WiFi band. Generally, the mobile devices 102 may transmit voice, video, multimedia, text, web content or any other user/client-specific content. Mobile devices are also operable to create and transmit measurement reports. A measurement report may indicate the strength of a wireless signal between the mobile device and other wireless and cellular devices to which it may connect. In order to facilitate a handover to an IP-CAN, a measurement report may be altered to report certain connections as weak and/or other connections as strong independent of the actual strength of the connections. In short, device 102 generates requests, responses or otherwise communicates with core networks 104 via access networks 106.

In the illustrated embodiment, core networks 104 include cellular core network 104a and public switched telephone network (PSTN) 104b. Cellular core network 104a typically includes various switching elements and gateways for providing cellular services. Cellular core network 104 often provides these services via a number ofRANs, such as RAN 106a, and also interfaces the cellular system with other communication systems such as PSTN 104b via a mobile switching center (MSC) 110. In accordance with the some CS technologies, such as GSM, CDMA, and UMTS, cellular core network 104a includes a circuit switched (or voice switching) portion for processing voice calls and a packet switched (or data switching) portion for supporting data transfers such as, for example, e-mail messages and web browsing. The circuit switched portion includes MSC 110 that switches or connects telephone calls between RAN 106a and PSTN 104b or other network. The packet-switched portion, also known as General Packet Radio Service (GPRS), includes a Serving GPRS Support Node (SGSN) (not illustrated), similar to MSC 110, for serving and tracking mobile devices 102, and a Gateway GPRS Support Node (GGSN) (not illustrated) for establishing connections between packet-switched networks and mobile devices 102. The SGSN may also contain subscriber data useful for establishing and handing over call connections. Cellular core network 104a may also include a home location register (HLR) for maintaining "permanent" subscriber data and a visitor location register (VLR) (and/or a SGSN) for "temporarily" maintaining subscriber data retrieved from the HLR and up-to-date information on the location of mobile devices 102. In addition, cellular core network 104a may include Authentication, Authorization, and Accounting (AAA) that performs the role of authenticating, authorizing, and accounting for devices 102 operable to access cellular core network 104a.

PSTN 104b comprises a circuit-switched network that provides fixed telephone services. A circuit-switched network provides a dedicated, fixed amount of capacity (a "circuit") between the two devices for the duration of a transmission session. In general, PSTN 104b may transmit voice, other audio, video, and data signals. In transmitting signals, PSTN 104b may use one or more of the following: telephones, key telephone systems, private branch exchange trunks, and certain data arrangements. Since PSTN 104b may be a collection of different telephone networks, portions of PSTN 104b may use different transmission media and/or compression techniques. Completion of a circuit in PSTN 104b between a call originator and a call receiver may require network signaling in the form of either dial pulses or multifrequency tones.

RAN 106a provides a radio interface between mobile devices 102 and cellular core network 104a that may provide real-time voice, data, and multimedia services (e.g., a call) to mobile devices 102. In general, RAN 106a communicates air frames 112 via radio frequency (RF) links. In particular, RAN 106a converts between air frames 112 to physical link based messages for transmission through cellular core network 104a. RAN 106a may implement, for example, one of the following wireless interface standards during transmission: Advanced Mobile Phone Service (AMPS), GSM standards, CDMA, Time Division Multiple Access (TDMA), General Packet Radio Service (GPRS), ENHANCED DATA rates for Global EVOLUTION (EDGE), or proprietary radio interfaces.

RAN 106a may include Base Stations (BSs) 114 connected to cellular radio controllers (RCs) 116. Within this specification, BSs 114 and RCs 116 refer generically to components of different cellular radio technologies. For example, BSs 114 and RCs 116 include, but are not limited to, Node Bs and radio network controllers in UMTS, and base transceiver stations and base station controllers in GSM. BS 114 receives and transmits air frames 112 within a geographic region of RAN 106a called a cell and communicates with mobile devices 102 in the cell. Each RC 116 is associated with one or more BS 114 and controls the associated BS 114. For example, RC 116 may provide functions such as handover, cell configuration data, control of RF power levels or any other suitable functions for managing radio resource and routing signals to and from BS 114. MSC 110 handles access to RC 116 and SIP radio controller 108, which may appear as a RC 116 to MSC 110. MSC 110 may be connected to RC 116 through a standard interface such as the A-interface.

IP-CAN 106b facilitates communication between mobile devices 102 and SIP radio controller 108. In general, network 106b communicates IP packets to transfer voice, video, data, and other suitable information between network addresses. In the case of multimedia sessions, network 106b uses Voice over IP (VoIP) protocols to set up, route, and tear down calls. Network 106b may include one or more local area networks (LANs), metropolitan area networks (MANs), wide area networks (WANs), all or a portion of the global computer network known as the Internet, and/or any other communication system or systems at one or more locations. IP-CAN 106b may also include SIP proxy servers (not illustrated) for routing SIP messages. Each SIP proxy server can be any software, hardware, and/or firmware operable to route SIP messages to other SIP proxies, gateways, SIP phones, SIP radio controller 108, and others.

In general, SIP radio controller 108 may include any software, hardware, and/or firmware operable to provide voice call continuity during handovers between legs using cellular radio technology and legs using broadband technology independent of an IMS. For example, mobile device 102 may access core networks 104 either through RAN 106a or IP-CAN 106b. In this case, when mobile device 102 switches between these two access networks 106 during a call session, SIP radio controller 108 may provide continuity of a call session between mobile device 102 and core network 104 transparent to the participating core network 104. In other words, SIP radio controller 108 may facilitate the switch between a cellular radio technology (e.g., GSM) and a broadband technology (e.g., SIP). In general, a SIP radio controller 108 may be integrated with a rack or system, or be a stand alone unit. In some embodiments, SIP radio controller 108 comprises a system. A system may be a single network node, a plurality of nodes, or a portion of one or more nodes. A system may be distributed and may cross network boundaries.

In some embodiments, SIP radio controller 108 helps facilitate handovers between access networks 106. SIP radio controller 108 may be operable to receive a request from device 102, which may be currently engaged in a call via the RAN 106a, to generate a call session through the IP-CAN 106b. The device 102, after registering with the SIP radio controller 108, may transmit a request via the RAN 106a for a handover to SIP radio controller 108. The MSC 110 may process the handover request in the same way it would process a handover request to another RC. SIP radio controller 108 may thus serve as a RC within the cellular core network 104a, a SIP endpoint in communications with the mobile device 102 through IP-CAN 106b, and an interface translating the SIP communications into the CS network 104a. In doing so, SIP radio controller 108 may facilitate domain transfer without pre-allocation of resources and without requiring IMS.

In managing different communication technologies, SIP radio controller 108 may convert between cellular and/or broadband technologies. The conversion may include conversion between parameters of different communication technologies and/or bit conversion. For example, SIP radio controller 108 may engage in a SIP session with mobile device 102 to engage in a voice call within the cellular core network 104a, and prior to transmitting voice data to cellular core network 104a, SIP radio controller 108 may perform any necessary conversions to send the data over a cellular radio technology, such as CDMA, GSM, or UMTS.

SIP radio controller 108 may, in one embodiment, emulate or otherwise represent itself as an element of core network 104. For example, SIP radio controller 108 may emulate or otherwise represent itself as a RC or other element of a core network 104. In the case that SIP radio controller 108 emulates a RC, SIP radio controller 108 may be queried by MSC 110 in cellular core network 104a like any other RC 116. SIP radio controller may also send messages to MSC 110 like any other RC 116.

In one aspect of operation, mobile device 102b may establish a call leg through RAN 106a. RC 116, MSC 110, and other elements of core network 104a, may register, authenticate, and provision resources to establish the call leg through RAN 106a. During the call session, mobile device 102 may periodically, and/or in response to an event, determine whether mobile device 102 is within operating range of IP-CAN 106b. In response to detecting IP-CAN 106b, the mobile device 102 may establish a connection with the IP-CAN 106b and transmit to SIP radio controller 108 a request to register. The mobile device 102 may also send to RC 116 a measurement report that indicates that the signal strength between the mobile device 102 and the RC 116 is weak and that the appropriate handover candidate is the SIP radio controller 108.The RC 116 may then transmit a message to the MSC 110 to initiate the handover process. The MSC 110 may communicate with the SIP radio controller 108 to coordinate a handover, as it would communicate during an inter-RC handover within the CS domain. The SIP radio controller 108 may wait for a SIP invite request from the mobile station 102. After receiving the invite request, the SIP radio controller 108 may establish a call leg through the IP-CAN 106b, and the MSC 110 may clear a portion of the resources of RAN 106a that were associated with the call. As a result the MSC 110 may perform a domain transfer of a call connected via a RAN to a call connected via an IP-CAN 106b as though it were an inter-RC handover within the CS domain.

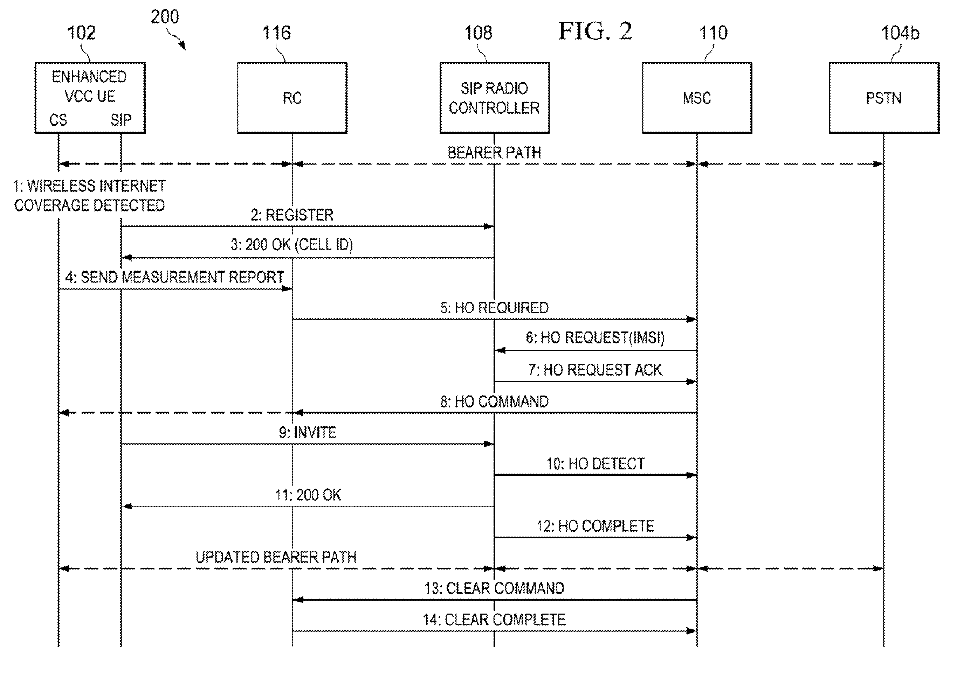

FIGURE 2 illustrates a call flow in accordance with communication system 100 of FIGURE 1. In particular, call flow 200 illustrates a GSM to SIP handover of mobile device 102. As discussed above, mobile device 102 may switch between accessing PSTN 104b through RAN 106a and IP-CAN 106b. The handover between access networks 106 may be transparent to the user of mobile device 102. The mobile device or enhanced VCC user equipment 102 can include any software, hardware, and/or firmware operable to implement methods for providing CS domain service (e.g., voice calls) over an IP-CAN when detecting sufficient coverage. In some embodiments, enhanced VCC user equipment 102 includes a 3GPP standard to support the CS domain service over an IP-CAN. In providing voice call continuity between a CS Domain and an IP-CAN, mobile device 102 may reduce, eliminate, or minimize the use GSM/UMTS radio resources. The enhanced VCC user equipment 102 may also implement a SIP client, which can include any software, hardware, and/or firmware operable to implement SIP protocols. In some embodiment, the SIP client can be a software module enabling easy distribution to 2G and 3G wireless devices. The SIP client may facilitate formation, modification and execution of communication sessions between mobile device 102 and elements in system 100. In addition, the SIP client may enable peer-to-peer communication and/or multipoint communication. In the event that a SIP session is being established with enhanced VCC user equipment 102, the SIP client may determine information in accordance with the SIP protocol, a port and/or an IP address of the element in system 100 with which enhanced VCC user equipment 102 is establishing a call session. Additionally, the enhanced VCC user equipment 102 may implement a wireless networking module, such as a WiFi or WiMax module, which can include any software, hardware, and/or firmware operable to communication with a wireless network in accordance with Internet Engineering Task Force (IETF), and other applicable standards.

In the example call flow, the user equipment 102 may be engaged in a call via the RC 116 and MSC 110. At call 1, the user equipment 102 may detect IP-CAN coverage, which may be set to the preferred coverage such that domain transfer procedures are initiated. Upon detection, the user equipment may transmit a SIP registration request to the SIP radio controller 108 at call 2. The SIP radio controller 108 may register the user equipment 102, and respond with an acknowledgment that includes a cell identifier of the SIP radio controller 108 in the CS domain at call 3.

At call 4, the user equipment may generate an altered measurement report wherein the user equipment 102 indicates a weak signal to RC 116, even if the signal is actually strong, and indicates that the SIP radio controller 108 is the strongest handover candidate. The RC 116, responding to the measurement report, may send a handover required message to the MSC 110 at call 5. At call 6, the MSC 110 may request SIP radio controller 108 to prepare for a handover from the user equipment 102 having a given International Mobile Subscriber Identification (IMSI), after which the SIP radio controller 108 responds with an acknowledgement in call 7. After receiving the acknowledgment, at call 8, MSC 110 may initiate the handover by transmitting a handover command to the user equipment 102 via the RC 116.

At call 9, the user equipment 102 may initiate a SIP session by sending a SIP invite request to the SIP radio controller 108. The SIP radio controller 108 correlates the invite request with the pending handover, and sends to the MSC 110 a handover detect message at call 10 indicating that the user equipment 102 is now using the target radio channel. The SIP radio controller 108 may then acknowledges the invite request and completes the voice connection with the user equipment 102 at call 11. At this point, the domain transfer successfully completed. At call 12, the SIP radio controller 108 may send a handover complete message to the MSC 110, which indicates that the handover was successful. At calls 13 and 14, the resources of the RC 116 dedicated to the user equipment 102 are cleared.

System 100 may implement some, none, or all of the steps illustrated in the call flow without departing from the scope of this disclosure.

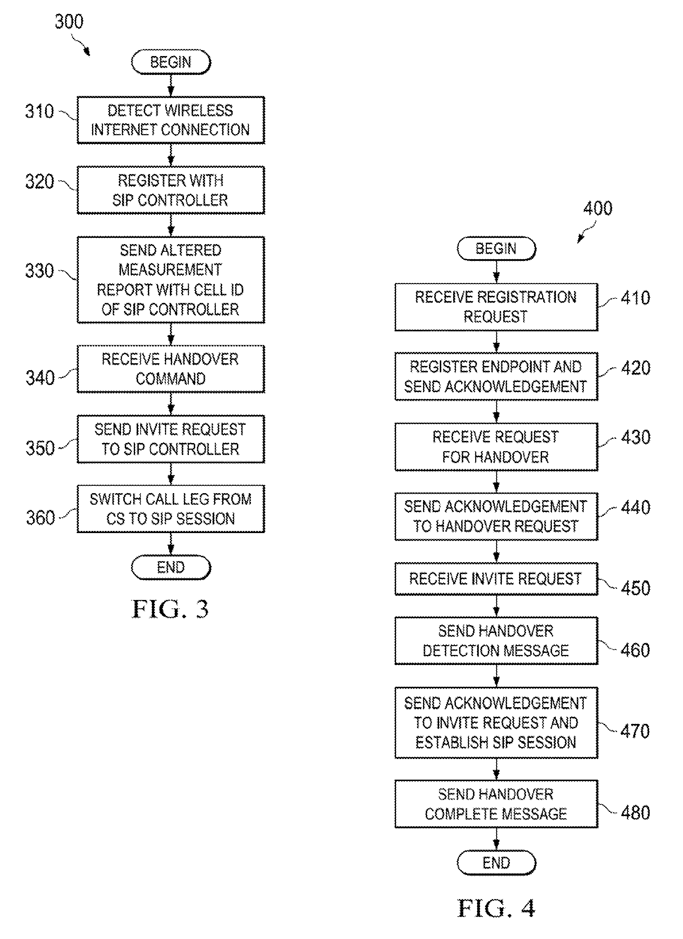

FIGURES 3 and 4 are flow diagrams illustrating example methods for enhanced call continuity. The illustrated methods are described with respect to system 100 of FIGURE 1, but these methods could be used by any other suitable system. Moreover, system 100 may use any other suitable techniques for performing these tasks. Thus, many of the steps in these flowcharts may take place simultaneously and/or in different orders than shown. System 100 may also use methods with additional steps, fewer steps, and/or different steps, so long as the methods remain appropriate.

Referring to FIGURE 3, method 300 begins at step 310 where mobile device 102 detects an IP-CAN connection. This connection could be made over a variety of protocols, such as WiFi or WiMax. At step 320, the mobile device 102 registers with the SIP radio controller 108. Mobile device 102 receives an acknowledgement to the registration that includes a cellular identifier that is pre-provisioned such that the cellular core network 104a relates the cellular identifier as belonging to the SIP radio controller 108. At step 330, the mobile device 102 creates and sends an altered measurement report to the RC 116. The report is used to initiate a handover between the RC 116 and the SIP radio controller 108 by, for example, simulating a fading signal with the RC 116 and a strong signal with the SIP radio controller 108.

At step 340, mobile device 102 receives a handover command, and sends an invite request to the SIP radio controller 108 at step 350. After receiving acknowledgement that the SIP session is established, the mobile device 102 switches the call leg from the RAN 106a connection to the SIP session via the IP-CAN 106b.

Referring to FIGURE 4, method 400 begins at 410 where SIP radio controller 108 may receive a register request from the mobile device 102. At step 420, the SIP radio controller 108 may register the mobile device 102 and respond with an acknowledgement. At step 430, the SIP radio controller 108 may receive a request for a handover from the MSC. Because the SIP radio controller 108 may appear to the MSC as an ordinary RC, the requests from and to the MSC may be handled as if the SIP radio controller functioned wholly in the CS domain. At step 440, after correlating the handover request with the earlier registration request, the SIP radio controller 108 may respond to the MSC 110 with an acknowledgement. At step 450, the SIP radio controller 108 may receive an invite request from the mobile device 102, and, after correlating the invite request with the pending handover, may send a handover detection message to the MSC 110 at step 460. At step 470, SIP radio controller 108 may send an acknowledgement to and establish a SIP session with the mobile device 102. At step 480, SIP radio controller 108 may send a message to the MSC 110 indicating that the handover has completed.

Although this disclosure has been described in terms of certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure.

## Claims

1. A method, comprising:
receiving a request to handover a call session from a radio access network to an internet protocol connectivity access network (IP-CAN); and
handing over the call session to the IP-CAN independent of an Internet Protocol Multimedia Subsystem (IMS).

2. The method of Claim 1, wherein handing over the call session comprises:
presenting a network node in the IP-CAN as a cellular radio controller (RC) to a cellular core network; and
handing over the call session to the IP-CAN using the network node.

3. The method of Claim 2, wherein handing over the call session comprises transmitting compatible information to the cellular core network using the network node.

4. The method of Claim 3, wherein the compatible information comprises at least one of: a handover request message, a handover request acknowledgment message, a handover detect message, and a handover complete message.

5. The method of Claim 1, wherein handing over the call session comprises:
receiving a session initiation protocol (SIP) request for registration over the IP-CAN; and
transmitting an acknowledgment in response to the register request in connection with registration.

6. The method of Claim 5, wherein the acknowledgment comprises a cellular identifier used by the mobile switching center.

7. The method of Claim 1, wherein handing over the call session comprises:
receiving a SIP invite request from the mobile device over the IP-CAN; and
transmitting an acknowledgement in response to the invite request.

8. The method of Claim 1, further comprising translating between a SIP message and a cellular message.

9. The method of Claim 1, wherein handing over the call session comprises terminating a portion of the call session through the radio access network.

10. A method, comprising:
generating a measurement report indicating signal strength of a wireless connection to a radio access network is weak independent of the actual signal strength; and
transmitting the measurement report to the radio access network to initiate a handover to a IP-CAN.

11. The method of Claim 10, wherein the measurement report indicates the IP-CAN as the appropriate handover candidate independent of signal strength of the IP-CAN.

12. A system for a communications network, comprising:
a data store; and
a processor communicatively coupled to the data store, the processor operable to:
receive a request to handover a call session from a radio access network to a IP-CAN; and
hand over the call session to the IP-CAN independent of an Internet Protocol Multimedia Subsystem (IMS).

13. The system of Claim 12, wherein the processor is further operable to:
present a network node in the IP-CAN as a cellular radio controller (RC) to a cellular core network; and
hand over the call session to the IP-CAN using the network node.

14. The system of Claim 13, wherein the processor is further operable to transmit compatible information to the cellular core network using the network node.

15. The system of Claim 14, wherein the compatible information comprises at least one of: a handover request message, a handover request acknowledgment message, a handover detect message, and a handover complete message.

16. The system of Claim 12, wherein the processor is further operable to:
receive a session initiation protocol (SIP) request for registration over the IP-CAN; and
transmit an acknowledgment in response to the register request in connection with registration.

17. The system of Claim 16, wherein the acknowledgment comprises a cellular identifier used by the mobile switching center.

18. The system of Claim 12, wherein the processor is further operable to:
receive a SIP invite request from the mobile device over the IP-CAN; and
transmit an acknowledgement in response to the invite request.

19. The system of Claim 12, wherein the processor is further operable to translate between a SIP message and a cellular message.

20. The system of Claim 12, wherein the processor is further operable to terminate a portion of the call session through the radio access network.

21. A system, comprising:
a data store; and
a processor communicatively coupled to the data store operable to:
generate a measurement report indicating signal strength of a wireless connection to a radio access network is weak independent of the actual signal strength; and
transmit the measurement report to the radio access network to initiate a handover to an IP-CAN.

22. The system of Claim 21, wherein the measurement report indicates the IP-CAN as the appropriate handover candidate independent of signal strength of the IP-CAN.
